Europäisches Patentamt

European Patent Office

Office européen des brevets

(19)

(11) **EP 0 970 368 B1**

(12) **FASCICULE DE BREVET EUROPEEN**

(45) Date de publication et mention
de la délivrance du brevet:
**21.01.2004 Bulletin 2004/04**

(21) Numéro de dépôt: **98917232.5**

(22) Date de dépôt: **25.03.1998**

(51) Int Cl.⁷: $G01N\ 21/89$

(86) Numéro de dépôt international:
**PCT/FR1998/000603**

(87) Numéro de publication internationale:
**WO 1998/044337 (08.10.1998 Gazette 1998/40)**

(54) **PROCEDE D'INSPECTION DE SURFACE D'UNE BANDE EN DEFILEMENT PAR CLASSIFICATION PREALABLE D'IRREGULARITES DE SURFACE DETECTEES**

VERFAHREN ZUR KONTROLLE DER OBERFLÄCHE EINER LAUFENDEN MATERIALBAHN MIT VORKLASSIFIKATION VON ERMITTELTEN UNREGELMÄSSIGKEITEN

METHOD FOR EXAMINING AN UNWINDING STRIP SURFACE BY PRE-CLASSIFICATION OF DETECTED SURFACE DEFECTS

(84) Etats contractants désignés:
**AT BE CH DE DK ES FI FR GB IT LI LU NL PT SE**

(30) Priorité: **28.03.1997 FR 9703897**

(43) Date de publication de la demande:
**12.01.2000 Bulletin 2000/02**

(73) Titulaire: **SOLLAC**
**92800 Puteaux (FR)**

(72) Inventeur: **ALEXANDRE, Patrick**
**F-70100 Gray (FR)**

(74) Mandataire: **Moncheny, Michel et al**
**c/o Cabinet Lavoix**
**2 Place d'Estienne d'Orves**
**75441 Paris Cedex 09 (FR)**

(56) Documents cités:
**EP-A- 0 316 961          EP-A- 0 757 245**
**US-A- 4 519 041          US-A- 5 301 129**

- **D. BRZAKOVIC ET AL: "Designing a defect classification system: a case study" PATTERN RECOGNITION., vol. 29, no. 8, août 1996, US, pages 1401-1419, XP004008127**

**Description**

La présente invention est relative à un procédé d'inspection de surface d'une bande en défilement, en particulier d'une tôle laminée défilant à grande vitesse, pour la détection de défaut de surface.

Dans les systèmes d'inspection de surface de type classique, dans lesquels les surfaces d'une bande en défilement sont contrôlées de façon automatique, l'inspection de surface s'effectue en formant au moins, une image numérique d'au moins une des faces de la bande, constituées d'un ensemble de lignes successives d'éléments d'image affectés chacun d'une valeur numérique, on filtre ladite au moins une image numérique pour la détection d'irrégularités de surface par détection de variations relatives desdites valeurs numériques, et l'on traite les irrégularités de surface pour l'identification du type de défaut de surface correspondant à chaque irrégularité détectée.

Selon cette technique d'inspection, le traitement des irrégularités de surface s'effectue généralement en identifiant le défaut, parmi un ensemble de défauts susceptible d'apparaître sur la surface inspectée, qui correspond à chaque irrégularité. Ainsi, l'analyse des irrégularités s'effectue de façon identique, quelle que soit la nature des irrégularités détectées. Le document US-A-4 519 041 est représentatif de cet état de la technique.

Par conséquent, ce type de système d'inspection de surface présente des vitesses de traitement relativement faibles, en particulier en raison de la nature de l'étape de traitement, qui nécessite un grand nombre de calculs relativement longs et complexes.

Le document "Designing a defect classification system, a case study", Pattern recognition vol. 29, n° 8, août 1996, pp 1401-1419, propose de réaliser, mais uniquement dans la phase de développement de l'installation, une sélection des paramètres les plus pertinents à considérer, préalablement à toute analyse des défauts en temps réel.

Le but de l'invention est de pallier ces inconvénients et de fournir un procédé d'inspection de surface permettant d'effectuer un tri préalable des irrégularités de surface détectées, quelle que soit la nature de la surface inspectée.

Elle a donc pour objet un procédé d'inspection de surface d' une bande en défilement selon la revendication 1.

Les irrégularités détectées étant préalablement classées selon un ensemble de classes sur chacune desquelles est effectué le traitement d'image, on conçoit que ce dernier est considérablement accéléré à l'aide de cette étape de dégrossissage préalable.

En outre, cette classification préalable permet de diminuer le taux d'erreurs de reconnaissance et donc d'améliorer la qualité de l'identification.

Le procédé selon l'invention peut en outre comporter une ou plusieurs des caractéristiques suivantes:

- on détermine un second mode de caractérisation des irrégularités pour chaque classé prédéfinie dont le nombre de paramètres caractéristiques est inférieur au nombre de paramètres caractéristiques de caractérisation générale et, postérieurement à l'étape de classification préalable, on détermine pour chaque irrégularité détectée la valeur des paramètres caractéristiques du second mode de caractérisation spécifique de ladite classe à laquelle appartient l'irrégularité, à partir des valeurs des paramètres caractéristiques de caractérisation générale;
- l'étape de traitement des irrégularités comporte une première étape d'identification du défaut correspondant à chaque irrégularité, parmi un ensemble de types de défauts spécifiques de la classe à laquelle ladite irrégularité appartient et une deuxième étape de classification dudit défaut identifié en vue de la confirmation et de la précision de la classification résultant de ladite première étape de classification;
- le procédé comporte une étape de qualification des types de défauts selon un premier type de défauts identifiés de façon certaine et/ou précise et un deuxième type de défauts identifiés de façon incertaine et/ou imprécise et en ce que ladite deuxième étape de classification n'est effectuée que sur les défauts de type qualifié incertain et/ou imprécis;
- le procédé comporte en outre une étape de regroupement de défauts identifiés utilisant un ensemble de critères prédéfinis, notamment des critères géométriques et/ou topographiques ;
- le procédé comporte en outre les étapes de comptage du nombre de défauts identifiés de même type par unité de longueur, et de comparaison dudit nombre de défauts de chaque type avec une valeur de seuil prédéterminée représentative du nombre minimum de défauts à partir duquel lesdits défauts sont susceptibles de présenter un caractère périodique, en vue de la détection de défauts périodiques ;
- postérieurement à l'étape de détermination de la valeur desdits paramètres, et antérieurement à ladite étape de classification préalable, on effectue une classification spécifique des irrégularités selon un ensemble de classes élémentaires, et l'on analyse la population desdites classes élémentaires en vue de la détection de défauts périodiques ;
- postérieurement à l'étape de filtrage, en réponse à une détection d'un élément d'image d'une irrégularité, on délimite dans une mémoire une zone de stockage de lignes d'éléments d'image successivement délivrées par les moyens de prise de vues et comportant au moins un élément d'image correspondant à au moins une irrégularité, on segmente chaque zone de stockage en zones suspectes présentant chacune au moins une irrégularité de surface, on apparie des zones suspectes de zones de stockage successives et correspondant à une même irrégularité et l'on compare le nombre total des lignes d'éléments d'image des zones suspectes appariées avec un seuil de détection de défaut de grande longueur, et, en cas de dépassement dudit seuil, on effectue ladite étape de traitement de ladite au moins une image numérique filtrée uniquement sur l'une desdites zones suspectes appariées, le résultat du traitement étant affecté aux autres zones suspectes appariées.

D'autres caractéristiques et avantages ressortiront de la description suivante, donnée uniquement à titre d'exemple et faite en référence aux dessins annexés sur lesquels :

- la figure 1 est un schéma général d'un mode de réalisation d'une installation d'inspection de surface fonctionnant en utilisant le procédé selon l'invention ;
- la figure 2 représente une partie d'une image délivrée par les moyens de prise de vues de l'installation de la figure 1 et stockée dans la mémoire ;
- les figures 3a à 3e représentent différentes images de la surface d'une bande pendant une étape de division d'images;
- la figure 4 est un organigramme illustrant le fonctionnement général de l'installation de la figure 1;
- la figure 5 est un organigramme montrant les différentes étapes de traitement des images numériques filtrées ;
- les figures 6a et 6b sont des schémas montrant, en fonction de la longueur et de la largeur des défauts de surface les différentes classes de défauts, respectivement pour un produit semi-fini (DKP) et pour un produit galvanisé ; et
- la figure 7 est un organigramme montrant les étapes d'un programme d'analyse de défaut de surface détectés.

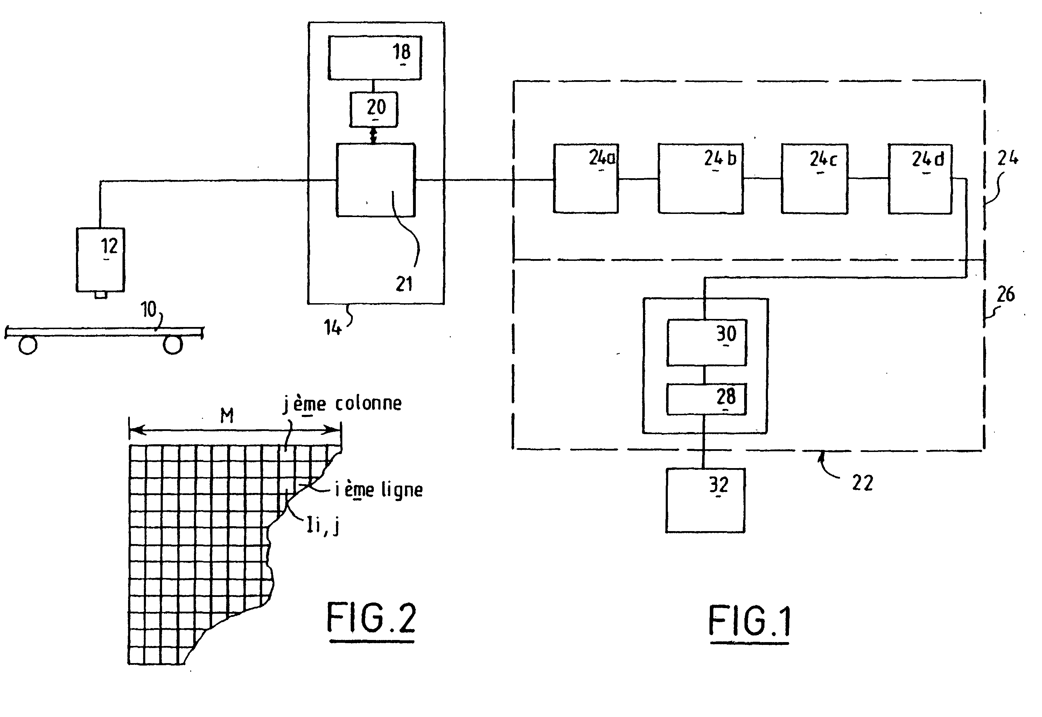

L'installation représentée sur la figure 1 est destinée à la détection de défaut de surface d'une bande 10 en cours de défilement à grande vitesse, par exemple une tôle laminée sortant d'une ligne de laminage.

Les surfaces de la tôle 10 sont inspectées au moyen d'un appareil de prise de vues 12 délivrant à un étage de filtrage 14 des images numériques de la surface de la bande.

Dans l'exemple de réalisation représenté, l'installation comporte un seul appareil de prise de vues 12 braqué sur une des surfaces de la bande, mais bien entendu, l'installation peut être équipée de deux appareils de vues adaptés pour former des images de chaque surface de la bande 10.

L'appareil de prise de vues 12 peut être constitué par tout type d'appareil approprié pour l'utilisation envisagée, dont la largeur de champ est sensiblement égale à la largeur de la zone d'inspection de la bande 10, laquelle zone d'inspection pouvant être constituée par la totalité de la largeur de bande. Il peut ainsi être constitué soit par une ou plusieurs caméras matricielles délivrant des images de longueur finie, en considérant le sens de défilement de la bande, soit par une caméra ou plusieurs caméras linéaires délivrant des images de longueur infinie.

Dans le cas où une caméra matricielle ou linéaire ne suffit pas pour couvrir toute la largeur de la zone d'inspection de la bande, on utilise plusieurs caméras réparties sur la largeur de la bande.

En référence à la figure 2, l'appareil de prise de vues 12 forme des lignes i de M éléments d'image $I_{i,j}$, ou pixels, adressables, pour un repère des pixels selon la longueur de la bande 10, par ligne n°i et, selon la largeur, par colonne n°j d'éléments d'image, chaque élément d'image étant associé à une valeur numérique représentative d'un niveau de gris.

Les lignes d'éléments d'image sont stockées dans une mémoire 18 de l'étage de filtrage sous la commande d'un circuit 20 de gestion.

Selon un premier exemple, l'appareil de prise de vues est constitué par une caméra linaire délivrant à la mémoire 18 10.000 lignes de 2048 pixels par seconde, ces lignes étant stockées dans la mémoire à des adresses successives.

Selon un autre exemple, l'appareil de prise de vues est constitué par deux caméras matricielles réparties sur la largeur de la bande pour couvrir la largeur de la bande et adaptées pour prendre 10 images/s. Chaque image délivrée par une seule caméra est constituée par 1024 lignes de 1024 pixels, délivrées à la mémoire 18.

Ainsi, le système de prise de vues débite en permanence des lignes d'éléments d'image, chaque élément d'image étant associé à une valeur numérique représentant un niveau de gris. On conçoit qu'il est cadencé par ligne s'il s'agit d'une caméra linéaire et cadencé par groupe de lignes s'il s'agit d'une caméra matricielle.

En se référant à nouveau à la figure 1, on voit que l'étage de filtrage 14 comporte en outre un circuit de filtrage 21 constitué par un opérateur de traitement d'images assurant la détection de variations relatives des valeurs numériques des éléments d'image ou pixels pour la détection d'irrégularités de surface.

De préférence, le circuit de filtrage est constitué par un circuit de détection de contour, par exemple un détecteur de type "Prewitt", détectant des variations de niveaux de gris entre des éléments d'image situés à proximité les uns des autres, ce qui permet de détecter des zones de la tôle 10 présentant des irrégularités de surface.

Comme le montre la figure 1, la sortie du circuit de filtrage 14 est reliée à une unité de traitement de signaux 22 comportant un premier étage 24 de segmentation des images numériques en zones d'éléments d'image délimitant chacune une irrégularité de surface détectée par l'étage de filtrage 14, et un deuxième étage 26 de traitement de signaux, constitué par un circuit de calcul 28 associé à une mémoire 30 correspondante, dans laquelle sont stockés des algorithmes de traitement pour la reconnaissance et l'identification de défaut de surface, pour chaque zone présentant une irrégularité de surface.

L'installation représentée sur la figure 1 est en outre munie d'un dispositif de visualisation 32 connecté en sortie de l'unité de traitement 22 dont une entrée est connectée à une sortie du circuit de calcul 28 et permettant la visualisation des défauts de surface détectés, associés à des informations relatives au type de défaut et à des paramètres représentatifs de la gravité de ces défauts, comme cela sera décrit en détail par la suite.

La description du fonctionnement de l'installation qui vient d'être décrite va maintenant être faite en référence aux figures 2 à 7.

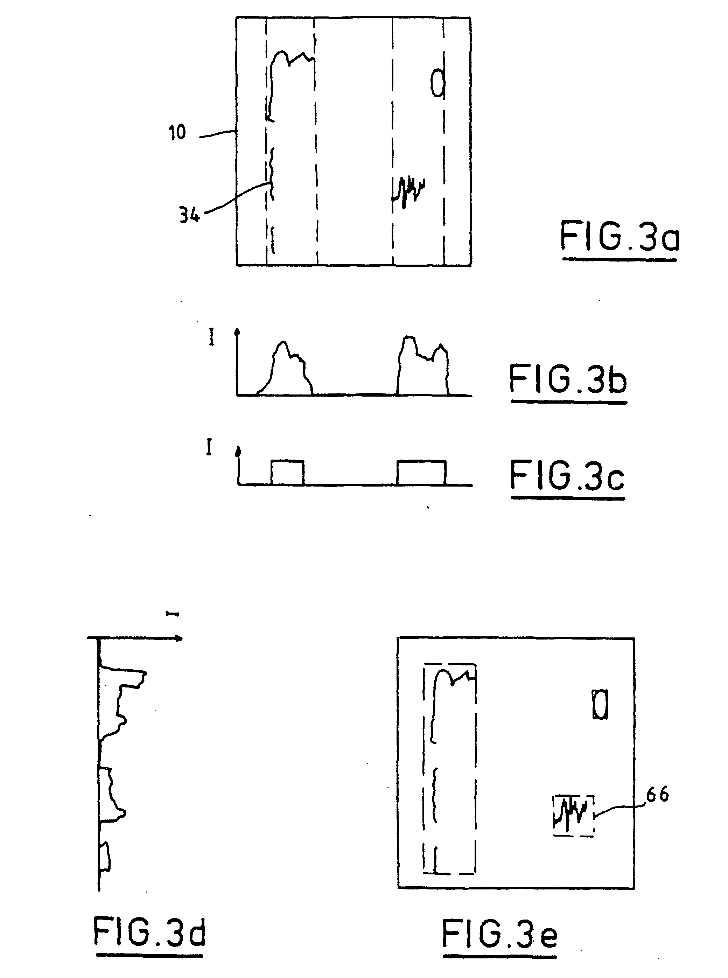

Sur la figure 3a, on a représenté une partie de la tôle 10 qui présente un ensemble d'irrégularités de surface tel que 34.

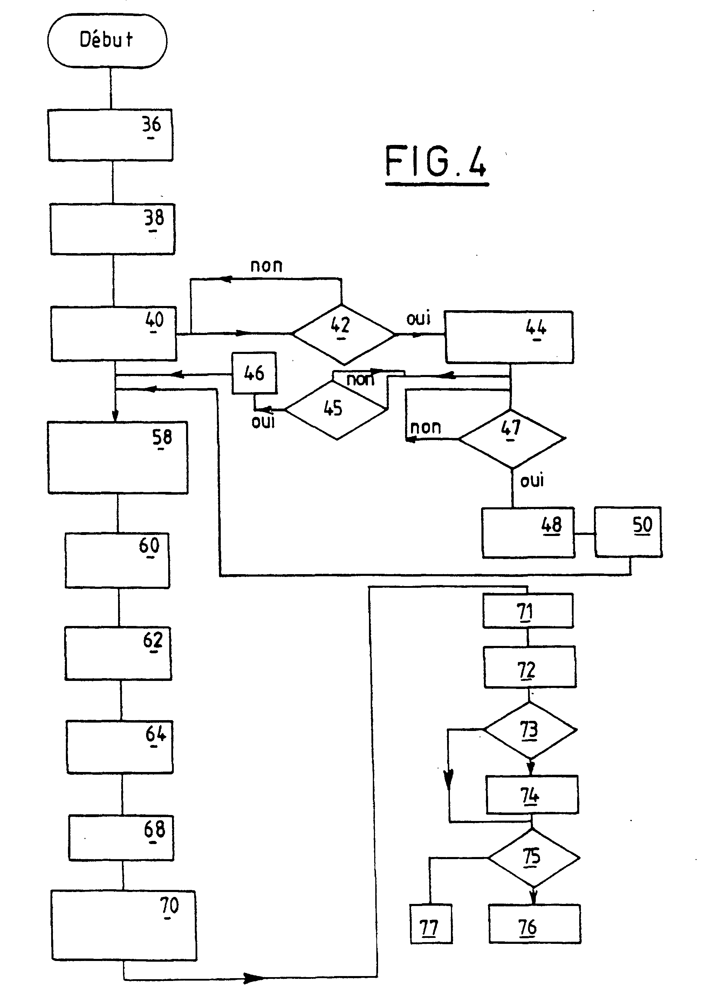

Le champ de l'appareil de prise de vues 12 couvre de préférence toute la largeur de la bande 10. En référence à la figure 4, au cours d'une première étape 36, l'appareil de prise de vues prend des lignes successives d'éléments d'images de la surface de la bande 10, ces éléments d'image étant stockés, dans la mémoire 18, associés à une valeur de niveau de gris.

Au cours de cette première étape 36 de prise de vues, le circuit de gestion 20 effectue, le cas échéant, une fusion des images délivrées par l'appareil de prise de vues 12, en regroupant les pixels successifs, d'une part dans le sens de la largeur de la bande 10 dans le cas où plusieurs caméras sont utilisées pour couvrir toute, la largeur de la zone d'inspection, pour obtenir dans la mémoire 18 une image dont la largeur correspond à celle de la zone inspectée, et, d'autre part, dans le sens de la longueur de la bande 10, dans le cas où l'appareil de prise de vues 12 utilise une ou plusieurs caméras matricielles, en fusionnant les groupes de lignes de pixels successivement délivrés.

L'image, stockée dans la mémoire 18, dénommée par la suite "image brute", est constituée d'un ensemble d'éléments d'images $I_{i,j}$, i désignant l'adresse de la ligne dans la mémoire, variant de 1 à N, et j désignant le numéro d'un élément d'image de chaque ligne et variant de 1 à M, M étant égal à par exemple 2048, chaque élément d'image étant associé à une valeur numérique de niveau de gris.

Il est à noter que la valeur N dépend de la capacité de la mémoire. Cette capacité doit être adaptée pour la mémorisation d'un nombre suffisant de lignes eu égard au traitement ultérieur à réaliser. Par exemple, pour la mémorisation d'une image correspondant à une longueur de 15 m de tôle avec un nombre de lignes d'éléments d'image égal à 1024/m, N est de préférence égal à 15360 lignes.

Lorsque la capacité de la mémoire est saturée, des lignes arrivant successivement sont mémorisées à la place de lignes de pixels les plus anciennes et préalablement mémorisées et normalement traitées.

Lorsque la mémoire 18 est saturée et que lesdites lignes de pixels les plus anciennes n'ont pas été traitées, une alarme de saturation est émise pour indiquer qu'une zone de la bande ne sera pas inspectée.

Dans ce cas, on repère sur la bande la zone non inspectée, par identification et mémorisation dans un fichier des lignes successives non mémorisées, en vue par exemple d'une analyse statistique de portions de la bande non inspectées.

Toutefois, compte tenu de la vitesse moyenne de défilement de bande et de la densité moyenne d'irrégularités de surface à identifier pour un type de bande donné, on peut déterminer une puissance moyenne de calcul nécessaire correspondant à une vitesse de traitement moyenne au delà de laquelle on ne risque plus, en pratique, d'effacer des lignes non traitées.

De préférence, on dimensionne donc les modules de traitement pour que la vitesse instantanée de traitement soit supérieure à cette vitesse moyenne.

Ainsi, outre son rôle de fusion des images, la mémoire 18 assure un rôle de tampon permettant d'encaisser de variations, et en particulier des augmentations, de la charge de traitement due à une augmentation de la densité d'irrégularités de surface.

Au cours de l'étape 38 suivante, on associe à chaque image stockée dans la mémoire 18, une image binaire représentant des lignes de contour d'irrégularités de surface.

Pour ce faire, au cours de cette étape, les lignes successives d'éléments d'image brute sont filtrées par le circuit de filtrage 21, constitué comme mentionné précédemment par exemple par un filtre bidirectionnel de Prewitt de type classique, ayant pour fonction de détecter des variations de niveaux de gris des éléments d'image brute traduisant l'existence d'irrégularités de surface en vue de la détermination de leur contour inscrit dans l'image binaire associée.

Dans le mode de réalisation décrit, on considère que le filtre employé est un filtre de Prewitt, mais bien entendu, tout autre type de filtre adapté pour l'utilisation envisagée peut également être utilisé.

Le filtre de Prewitt assure un repérage de la position du contour d'irrégularité de surface en détectant, sur chaque ligne d'une image brute, des éléments d'image susceptibles d'appartenir à une ligne de contour d'irrégularité, ces éléments d'images étant désignés par la suite "pixels suspects".

Le filtre qu'on utilise ici affecte une valeur numérique "1" à chaque élément d'image binaire associé à chaque pixel suspect de l'image brute délivrée par l'appareil de prise de vues 12, les autres pixels de l'image binaire étant maintenus à 0.

Cette étape 38 de filtrage permet ainsi de former dans la mémoire 18 une image binaire constituée d'un ensemble d'éléments d'image binaires $B_{i,j}$ à chacun desquels est affectée une valeur binaire égale à 1 pour un pixel appartenant à un contour d'une irrégularité et égale à une valeur nulle pour un pixel n'appartenant pas à un contour d'une irrégularité de surface.

Au cours de l'étape 40 suivante, l'image binaire stockée dans la mémoire 18 est traitée à l'aide d'un opérateur classique de connectivité qui applique un masque à cette image pour forcer à la valeur numérique "1" des pixels de l'image binaire ayant une valeur nulle et situés entre deux éléments d'image suspects relativement proches, en vue d'obtenir et de définir des lignes continues pour chaque contour détecté.

Après avoir subi ce traitement, les images brutes et binaires sont nettoyées pour éliminer les taches délimitées par un contour dont la surface est inférieure à un seuil déterminé, par exemple de 3x3 pixels. On obtient alors une image binaire, superposée à l'image brute délivrée par l'appareil de prise de vues 12, et montrant les contours délimitant les irrégularités de surface détectées dans l'image brute. L'image binaire et l'image brute sont alors prêtes au traitement.

Au cours de l'étape 42 suivante, le circuit de gestion 20 analyse successivement chaque ligne de l'image binaire mémorisée, pour la détection des éléments binaires de valeur "1", c'est-à-dire suspects. Dès qu'un pixel suspect est détecté, le circuit de gestion 20 repère le numéro de la ligne correspondante, ouvre une zone de stockage de capacité prédéterminée sous la forme d'une fenêtre dans la mémoire 18 (étape 44) à partir de ce numéro de ligne et maintient cette fenêtre ouverte tant que le circuit de gestion détecte des pixels suspects dans les lignes suivantes.

Cette fenêtre, désignée par la suite par "fenêtre suspecte", contient ainsi des pixels suspects, c'est-à-dire susceptibles d'appartenir à une irrégularité de surface.

Le circuit de gestion 20 referme la fenêtre suspecte dès qu'aucun pixel suspect n'est plus détecté dans un nombre prédéterminé de lignes successives de l'image binaire, en enregistrant le numéro de la dernière ligne dans laquelle on a repéré un pixel suspect.

La fenêtre suspecte ainsi définie dans la mémoire 18 représente un segment d'image brute, associé à un segment d'image binaire correspondant, et contient au moins une irrégularité de surface que l'on cherche à identifier et à reconnaître.

En particulier, la fenêtre, ouverte lors de l'étape 44, est maintenue ouverte tant que le nombre des dernières lignes successives d'éléments d'image stockées dans ladite fenêtre ne contenant pas de pixel suspect ne dépasse pas un nombre de seuil prédéterminé de lignes binaires successives, ce seuil étant au moins égal à 1.

Ainsi, au cours de l'étape 45 suivante, le nombre des lignes successives d'éléments d'image ne contenant pas de pixel suspect est comparé à ce nombre de seuil et, en cas d'égalité, la fenêtre suspecte est fermée (étape 46).

Par ailleurs, lors de l'étape 47, le nombre de lignes enregistrées dans la fenêtre ouverte est comparé à un seuil prédéterminé dit de "détection de fenêtre de grande longueur" ou de "détection d'un défaut long".

Ce seuil prédéterminé correspond à la capacité maximale prédéterminée des zones de stockage dans la mémoire 18.

Si le nombre de lignes enregistrées est supérieur à ce seuil, la fenêtre est fermée (étape 48) et l'on décide, lors de l'étape 50 suivante, que la fenêtre est une fenêtre dite "suspecte de grande longueur", qui contient une irrégularité de surface dont le nombre de lignes d'éléments d'image est supérieur au seuil de détection de défaut long.

On notera également que, dans l'exemple de réalisation décrit, les fenêtres suspectes sont ouvertes de façon successive.

Le procédé d'inspection de surface se poursuit par des phases de division des fenêtres suspectes stockées dans la mémoire 18 en zones dites "zones suspectes" présentant chacune une irrégularité de surface, en utilisant soit la composante correspondant à l'image brute, soit la composante correspondant à l'image binaire.

Pour ce faire, l'étage 24 réalise, au cours des étapes 58 à 64 suivantes, un calcul, à l'aide de moyens appropriés, par exemple des moyens logiciels, du profil d'accumulation des valeurs numériques ou des valeurs binaires, respectivement pour chaque image brute ou chaque image binaire, d'une part dans le sens longitudinal et, d'autre part, dans le sens de la largeur, par projection des valeurs numériques ou des valeurs binaires selon deux axes perpendiculaires et par seuillage des profils de manière à délimiter des zones suspectes incorporant chacune une irrégularité de surface.

Bien que le calcul de ce profil puisse être effectué à partir des valeurs numériques associées aux éléments d'image de l'image brute ou à partir des valeurs binaires de l'image stockée après traitement, dans la suite de la description, on considérera que le traitement de l'image est effectué à partir de l'image binaire.

Cette opération de calcul débute par une phase de segmentation de chaque fenêtre suspecte en bande suspecte englobant des irrégularités, chaque bande étant ensuite segmentée en une ou plusieurs zones suspectes.

Tout d'abord, au cours de l'étape 58, l'étage 24 calcule, à l'aide d'un circuit de calcul 24-a (figure 1), la somme des valeurs binaires de chaque ligne de la fenêtre suspecte pour obtenir, sur M colonnes, un premier profil transversal, dans le sens de la largeur de la bande. On obtient ainsi la courbe représentée sur la figure 3b.

Au cours de l'étape 60 suivante, ce profil est présenté en entrée d'un circuit de cadrage 24-b, pour être cadré de manière à ne pas séparer des éléments d'image d'une irrégularité situés à proximité les uns des autres.

Le circuit de cadrage 24-b peut être constitué par tout type de filtre approprié, tel qu'un filtre RIF à réponse impulsionnelle finie, ou RII à réponse impulsionnelle infinie, mais est de préférence constitué par un filtre de type à fenêtre glissante permettant de délivrer un profil cadré r(x) dont les valeurs sont déterminé selon la relation suivante :

$$r(x) = \sum_{i=-K}^{K} F(x-i) \times Q(i) \qquad (1)$$

dans laquelle K désigne la largeur de la fenêtre glissante,

F(x-i) désigne la valeur de la colonne (x-i) du profil à cadrer,

Q désigne le coefficient du filtre à fenêtre glissante, choisi par exemple égal à 1, et

x désigne le numéro de colonne du profil cadré.

Le profil ainsi cadré est ensuite seuillé à l'aide d'un circuit de seuillage 24-c, au cours de l'étape 62 suivante, par comparaison avec une valeur de seuil de détection d'irrégularités.

On obtient ainsi le profil cadré et seuillé représenté sur la figure 3c délimitant des bandes suspectes, représentées à l'aide de pointillés sur la figure 3a, englobant chacune une ou plusieurs irrégularité de surface.

Comme mentionné précédemment, les bandes suspectes ainsi définies sont ensuite segmentées en zones suspectes présentant chacune une irrégularité de surface.

Pour ce faire, au cours de l'étape 64 suivante, les étapes 58,60 et 62 sont effectuées à nouveau et appliquées indépendamment à chaque ligne d'éléments d'image de chaque bande suspecte, de façon à obtenir un profil d'accumulation des valeurs binaires dans le sens longitudinal, comme représenté sur la figure 3d.

Ce profil longitudinal est ensuite cadré et seuillé, comme précédemment, pour obtenir l'image représentée sur la figure 3e dans laquelle sont définies des zones suspectes, telles que 66, qui délimitent chacune une irrégularité de surface détectée, chaque irrégularité pouvant, bien entendu, comporter plusieurs objets ou segments d'irrégularité.

Chaque zone suspecte ainsi définie contient donc un segment d'image brute et le segment d'image binaire correspondant.

De préférence, les zones suspectes 66 ainsi délimitées sont en outre présentées en entrée d'un deuxième circuit de calcul 24-d, connecté en sortie du circuit de seuillage 24-c, au moyen duquel les irrégularités de petites dimensions sont éliminées.

Pour ce faire, au cours de l'étape 68 suivante on traite de façon indépendante chaque zone suspecte de l'image binaire à l'aide d'un algorithme de labelisation classique en vue de délimiter des objets constitutifs d'une irrégularité de surface, chaque objet étant défini par un ensemble d'éléments d'image suspects en contact entre eux.

La surface de chaque objet est ensuite calculée, ainsi que la surface moyenne des objets appartenant à une même zone suspecte.

Les objets de petites dimensions sont éliminés du traitement. Pour ce faire, on décide d'éliminer les objets dont la surface individuelle est inférieure à un pourcentage prédéterminé de la surface moyenne calculée.

on obtient ainsi, en sortie du circuit de calcul 24-d, des zones suspectes contenant chacune une irrégularité, desquelles les petits objets ont été éliminés.

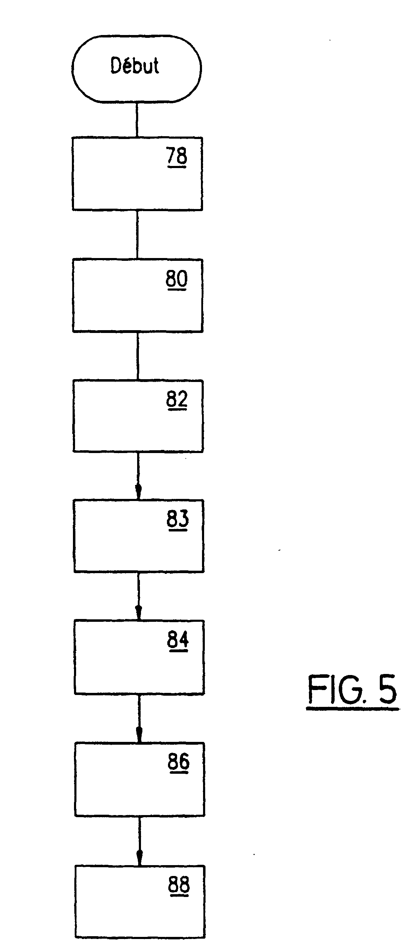

Ces zones suspectes ainsi nettoyées sont ensuite stockées dans la mémoire 30 du circuit de calcul 28 en vue d'être traitées, comme cela sera décrit en détail par la suite en référence à la figure 5.

Il est à noter que les circuits de calcul 24-a, de cadrage 24-b, et de seuillage 24-c et de calcul 24-d sont des circuits de type classique. Ils ne seront donc pas décrits en détail par la suite.

Dans le cas où une fenêtre suspecte a été qualifiée de fenêtre suspecte de grande longueur au cours de l'étape 50 précédente, l'étape de traitement des images est précédée d'une phase d'élimination du traitement de certaines zones suspectes, ce qui permet de diminuer la charge du circuit de calcul 28.

A cet effet, dès qu'on détecte (étapes 47,48 et 50) une fenêtre suspecte de grande longueur et qu'on la découpe en zones suspectes comme précédemment décrit, on repère au cours de l'étape 70 suivante au moins une zone suspecte de cette fenêtre dont la ligne inférieure d'éléments d'image appartient à celle de ladite fenêtre . Cette zone suspecte ainsi repérée est alors qualifiée de "zone suspecte coupée en bas".

La fenêtre suspecte suivant une fenêtre suspecte de grande longueur est qualifiée de "fenêtre suspecte de prolongement".

On conçoit qu'une fenêtre suspecte de prolongement peut également être de grande longueur.

Après découpage, comme précédemment décrit, d'une fenêtre suspecte de prolongement en zones suspectes, on repère l'au moins une zone suspecte de cette fenêtre dont la ligne supérieure d'éléments d'image appartient à celle de ladite fenêtre, cette zone suspecte étant alors qualifiée de "zone suspecte coupée en haut" ou "zone suspecte de prolongement" (étape 71).

On apparie les zones suspectes "coupées en bas" de la fenêtre de grande longueur et celles, "coupées en haut", de la fenêtre suspecte de prolongement (étape 72).

Au cours de l'étape 73 suivante on détermine si la fenêtre suspecte de prolongement est elle-même de grande longueur. Si tel est le cas, on repère au moins une zone suspecte de cette fenêtre dont la ligne inférieure d'éléments d'image appartient à celle de ladite fenêtre, cette zone suspecte étant alors qualifiée comme précédemment de "zone suspecte coupée en bas" et on effectue le même traitement de recomposition de cette zone suspecte avec les zones suspectes "coupées en haut" de la fenêtre suivante, dite de prolongement (étape 74).

Au fur et à mesure de l'appariement ou de l'association des zones suspectes coupées d'une fenêtre à la suivante, on met à jour la longueur de chaque défaut. Au cours de l'étape 75 suivante, l'unité de traitement 22 compare la longueur de chaque défaut avec la longueur d'une fenêtre de grande longueur, c'est-à-dire avec le seuil de détection de défaut long précédemment mentionné.

Dès que cette longueur dépasse celle d'une fenêtre de grande longueur, on qualifie le défaut comme étant un défaut long (étape 76) et on ouvre "un groupe défaut long" défini par une zone de la mémoire de l'étage de traitement dans lequel on place toutes les zones suspectes successives coupées et associées qui constituent en fait un seul et même défaut dit "défaut long".

On élimine ensuite du traitement d'image toutes les zones suspectes de prolongement qui appartiennent à des groupes "défaut long" ; ainsi, dans chaque groupe "défaut long", le traitement d'image n'est effectué que sur la première zone suspecte ("coupée en bas") et, pour simplifier le traitement, on affecte le résultat de ce traitement à toutes les zones suspectes de prolongement du même groupe "défaut long".

Au fur et à mesure de l'appariement ou de l'association des zones suspectes coupées d'une fenêtre à la suivante, en mettant à jour la longueur de chaque défaut associé à des zones suspectes qui se correspondent d'une fenêtre à la suivante, on peut constater au cours de l'étape 75 que ce défaut n'est pas un défaut long.

La segmentation d'un tel défaut ne peut pas avoir lieu sur plus de deux fenêtres successives, sinon il serait qualifié de défaut long.

Dans ce cas, on ouvre dans la mémoire 30 une zone de stockage sous la forme d'une zone suspecte dite "de recomposition" dans laquelle on place les deux zones suspectes coupées du même défaut, convenablement raboutées et centrées, la taille de ladite fenêtre étant adaptée pour cadrer ledit défaut comme dans le cas des zones suspectes non coupées (étape 77).

Les zones suspectes de recomposition sont ensuite traitées comme toutes les autres zones suspectes.

La phase de segmentation des images brutes et binaires en zones suspectes à traiter étant maintenant terminée, on procède alors au traitement de chaque zone suspecte délimitée lors des étapes 58 à 68, à l'exception des zones suspectes de prolongement de groupe "défaut long".

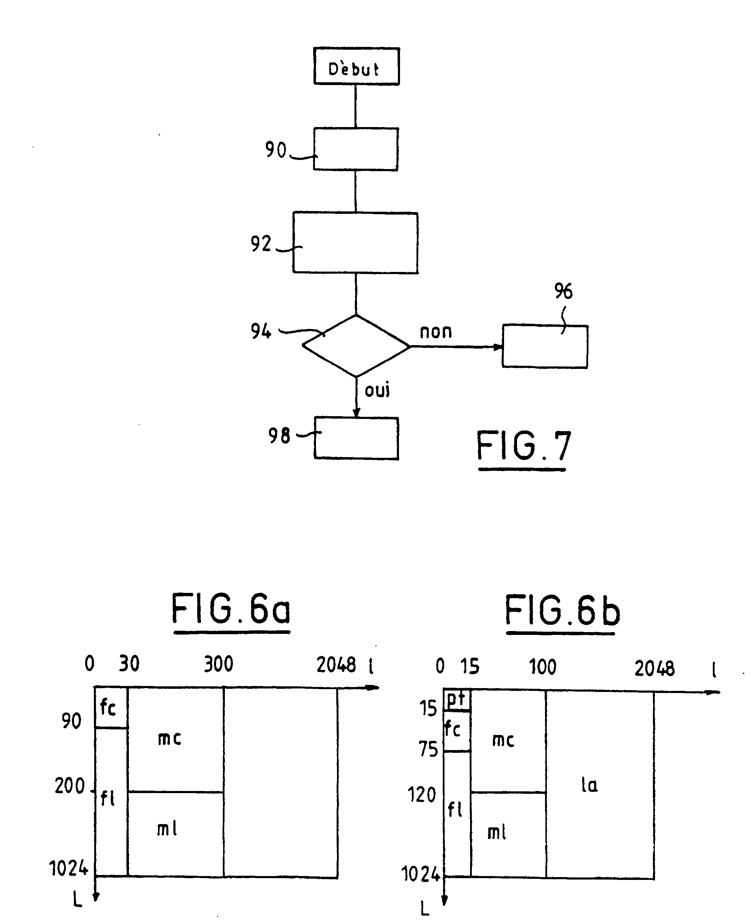

Le traitement de chaque zone suspecte va maintenant être décrit en référence aux figures 5 et 7.

Ce traitement débute par une étape 78 de calcul de paramètres d'identification de défaut, généralement qualifiée d'étape d'extraction de paramètres.

D'une manière connue en elle-même, on détermine la nature des paramètres susceptibles de caractériser les défauts ou les irrégularités de surface de la bande à inspecter, et nécessaires pour les reconnaître et les identifier de manière précise et fiable.

On détermine également le mode de calcul de ces paramètres, notamment en fonction de valeurs d'éléments d'image de l'image brute ou binaire d'une zone suspecte contenant ledit défaut ou ladite irrégularité de surface.

D'une manière classique, parmi ces paramètres on trouve généralement la longueur, la largeur et la surface d'une irrégularité de surface dans une zone suspecte, l'intensité moyenne des niveaux de gris des éléments de l'image brute à l'intérieur du défaut, l'écart type de ces niveaux de gris...

Le nombre de paramètres nécessaires pour une reconnaissance précise et fiable, désigné par la suite P, peut être très élevé et atteindre par exemple 65.

La nature et le mode de calcul des paramètres des défauts étant maintenant défini pour un type de bande à inspecter, on procède au calcul des P paramètres pour chaque zone suspecte.

Chaque zone suspecte ou irrégularité peut ainsi être représentée par un point dans un espace P-dimensionnel.

Ce nombre élevé P de paramètres est un handicap, eu égard au temps et aux moyens de traitement de reconnaissance des zones suspecte. Afin d'éviter, tout au moins de limiter, ce handicap, on effectue une étape de dégrossissage 80 qui permet de simplifier de façon considérable le traitement de chaque zone suspecte en classant les irrégularités selon un ensemble de classes de dégrossissage. Cette étape de dégrossissage, qui constitue une classification préalable des irrégularités, selon un ensemble de classes prédéfinies, permet de diviser le problème général de l'analyse des irrégularités en un ensemble de problèmes plus simples à traiter.

En particulier, à l'intérieur de chaque classe de dégrossissage, on définit un ensemble de classes élémentaires ou familles de défauts, dont le nombre est limité.

Pour pouvoir mettre en oeuvre l'étape de dégrossissage, il est nécessaire d'avoir prévu une phase préalable de définition des classes de dégrossissage et, éventuellement, de leur repère simplifié associé, généralement avant la mise en oeuvre du procédé selon l'invention.

Cette phase préalable est spécifique d'un type de bande à inspecter.

Comme exemple de phase préalable aboutissant à la définition de classes de dégrossissage, on procède par apprentissage de la façon suivante.

On procède à une inspection de surface, comme précédemment décrit jusqu'à ce stade du procédé, d'un nombre suffisant d'échantillons du même type de bande pour aboutir à une population suffisamment nombreuse et représentative de zones suspectes, dont chaque irrégularité est représentée par un point dans l'espace P-dimensionnel précédemment mentionné.

Selon la méthode connue par ailleurs d'analyse factorielle de correspondance, on repère comment ces points se regroupent en nuages dans cet espace.

On considère alors que chaque région de l'espace délimitant un nuage permet de définir une typologie de défauts, et les défauts d'un même nuage ont donc des éléments en commun et vont pouvoir être éventuellement représentés dans un repère simplifié propre à ce nuage ou à cette typologie.

Pour définir les axes d'un repère simplifié propre à une typologie ou à un nuage donné, on peut utiliser les axes principaux d'inertie de ce nuage, dont les positions et directions peuvent être calculées d'une manière connue en elle-même.

Ainsi, tous les défauts d'une même classe peuvent être représentés dans le même repère simplifié dans un espace dont la dimension est inférieure à P, c'est-à-dire que tous les défauts d'une même classe peuvent être caractérisés par un nombre réduit de paramètres, inférieur à P.

En faisant appel à des méthodes mathématiques classiques, on établit des matrices de changement de repère qui permettent de passer d'une représentation des défauts dans un espace P-dimensionnel à une représentation du même défaut dans un repère simplifié de dimensions réduites.

Ainsi, dans cette phase préalable destinée à préparer le dégrossissage, on a défini des typologies ou "classes de dégrossissage" de défauts et un repère simplifié de représentation de défaut, propre à chaque classe de dégrossissage.

Selon un exemple spécifique, ces classes de dégrossissage peuvent être définies à partir de la longueur (L) ou la largeur (l) des irrégularités ; en référence aux figures 6a et 6b, on définit par exemple 5 et 6 classes de dégrossissage, respectivement pour une tôle "DKP" et pour une tôle galvanisée, à savoir une classe de défauts petits (pt), une classe de défauts fins et courts (fc), une classe de défauts fins et longs (fl), une classe de défauts moyens et courts (mc), une classe de défauts moyens et longs (ml) et une classe de défauts larges (la) ; à chaque classe étant associé un repère simplifié de représentation.

Après l'étape d'extraction des paramètres, on peut maintenant mettre en oeuvre l'étape 80 de classification préalable ou de dégrossissage, proprement dite.

Pour ce faire, on répartit chaque défaut ou irrégularité de surface de zone suspecte dans les différentes classes de dégrossissage préalablement définies, en fonction de la valeur des P paramètres d'un défaut et des caractéristiques qui définissent ces classes.

Cette répartition préalable des défauts en classes de dégrossissage permet de simplifier considérablement la reconnaissance de défauts, en effectuant cette reconnaissance sur chaque classe de dégrossissage.

En variante, on représente tous les défauts d'une même classe dans le repère simplifié associé à cette classe, en utilisant la matrice de changement de repère de cette classe, appliquée aux P paramètres. On aboutit alors à une caractérisation simplifiée de tous les défauts, par un nombre réduit de paramètres, ce qui limite la quantité de calculs à effectuer lors de la reconnaissance.

L'étape 82 ultérieure du traitement consiste à reconnaître et à identifier les défauts de chaque classe de dégrossissage.

Le traitement d'identification et de reconnaissance est spécifique à chaque classe de dégrossissage et est généralement défini au préalable en fonction des types de défaut qu'on est susceptible de rencontrer dans chaque classe.

Ce traitement d'identification et de reconnaissance peut consister en une classification se basant par exemple sur la méthode dite des "sphères de Coulomb".

On peut également utiliser d'autres méthodes connues, comme la méthode d'analyse discriminante, la méthode de l'arbre de décision ou la méthode qui passe par la détermination du "K" plus proche voisin.

Selon la méthode des sphères de Coulomb, les typologies de défaut, spécifiques d'une classe de dégrossissage donnée, sont représentées par des sphères, repérables, en position et en taille, dans l'espace simplifié associé à cette classe.

Chaque sphère correspond à un type de défaut et/ou à un nom d'identification de défaut.

Ainsi, pour reconnaître et identifier un défaut d'une classe de dégrossissage donnée, on repère, lors de l'étape 83, à quelle sphère appartient le défaut et on attribue le nom d'identification associé à cette sphère (étape 84).

Avantageusement, cette opération de reconnaissance et d'identification peut être effectuée très rapidement parce que, le nombre de sphères et le nombre de paramètres étant réduits du fait de l'étape précédente de dégrossissage, les calculs de classification peuvent être réalisés sur un nombre réduit de critères.

Dans le cas particulier où, à l'intérieur d'une classe de dégrossissage donnée, on rencontrerait un défaut n'appartenant à aucune sphère, on lui attribue le nom d'identification de la sphère la plus proche.

Ainsi, à la fin de l'étape 84 d'affectation d'un nom d'identification de défaut à chaque irrégularité, toutes les irrégularités sont identifiées comme correspondant à un type particulier de défaut.

L'étape 86 suivante consiste à effectuer une deuxième classification en utilisant un deuxième étage de classification du circuit de calcul 28, à partir d'un nombre de classes réduit, afin, par exemple, de confirmer le résultat fourni par le premier étage de classification et de lever certaines incertitudes qui auraient pu apparaître dans l'identification de certains défauts, ou afin, par exemple, de différencier en typologie plus resserrée des défauts d'un même type que l'on aurait décidé de ne pas différencier au niveau du premier étage de classification, faute de performances suffisantes de classification à ce niveau.

Pour pouvoir mettre en oeuvre cette deuxième étape 86 de classification, il est nécessaire d'avoir prévu une phase préalable de qualification de chaque classe élémentaire.

Dans cette phase préalable, on effectue des traitements statistiques de validation ou de non validation de la classification effectuée pour l'identification des défauts, en utilisant le procédé qui vient d'être décrit, de manière à repérer les classes élémentaires qui contiennent le plus d'erreurs de classement de défaut.

Ces classes élémentaires, en nombre réduit, qui contiennent le plus grand nombre d'erreurs de classement, sont qualifiées de "classes élémentaires d'identification incertaine", les autres, qui contiennent le moins d'erreurs de classement, sont qualifiées de "classes élémentaires d'identification certaine".

La deuxième classification, mise en oeuvre dans l'étape 86, n'est effectuée que sur les défauts ou irrégularités classés dans les classes élémentaires d'identification incertaine.

Le deuxième étage de classification utilise par exemple l'une des méthodes de classification mentionnées précédemment.

Il est adapté par exemple pour valider ou non l'appartenance des défauts à ces classes d'identification incertaine. En cas de non validation, le défaut est alors considéré comme n'étant pas un défaut et est éliminé du traitement.

Il peut être également adapté pour répartir les défauts de certaines classes élémentaires d'identification incertaine dans des classes d'identification précise, prédéfinies selon une typologie plus resserrée.

Il est à noter que cette classification supplémentaire porte sur un nombre très réduit de classes de défauts et peut donc être effectuée très rapidement.

A l'issue de ces étapes 80 à 86, chaque défaut est identifié et reconnu, c'est-à-dire affecté à une classe élémentaire.

La phase de traitement d'images s'achève par une étape 88 de fusion des données au cours de laquelle certains défauts sont regroupés, en utilisant des critères préalablement définis, portant notamment sur la géométrie et la topologie des défauts (par exemple : distance des défauts entre eux, position identique au dessus et en dessous de la bande, proximité du bord de bande,...).

Cette phase de fusion permet de remédier à certaines imperfections susceptibles d'apparaître lors de la reconnaissance des défauts et de résoudre quelques problèmes particuliers de confusion, sans remettre en cause les résultats déjà confirmés.

La décision de regroupement de défauts se fait après confrontation d'informations en provenance du proche voisinage d'un objet à reconnaître, de l'ordre du mètre par exemple, d'autres appareils de prise de vues (par exemple braqué vers l'autre face de la bande), ou de données relatives au traitement de la bande (nature de la bande, point d'arrêt, ...).

En particulier, on décide de regrouper entre eux des défauts pour lesquels une ambiguïté sur le nom subsiste, ainsi que des défauts de même nature.

Par ailleurs, on regroupe les défauts présentant des relations de proximité particulières, par exemple à savoir les défauts situés à proximité, sur une même face de la bande ou sur un face opposée, ainsi que les défauts situés dans le même alignement longitudinal ou transversal.

Ainsi, par exemple, dans le cas d'une tôle galvanisée, un défaut de type "traînée granuleuse" se traduit par une multitude d'irrégularités de surface situées au voisinage de la rive de la tôle. Dans ce cas, l'identification du défaut n'est pas totalement fiable. En effet, chacune de ces irrégularités peut être reconnue comme appartenant à une "traînée granuleuse", ou être reconnue individuellement comme un défaut d'un autre type, notamment une "exfoliation", ou une "boursouflure".

Dans ce cas particulier, on fusionne les irrégularités situées au voisinage de la rive de la tôle et alignées les unes par rapport aux autres et on les identifie comme appartenant à un défaut de type "traînée granuleuse".

De même, selon un autre exemple, on regroupe, au cours de cette étape de fusion, les défauts situés dans la même position, sur les faces supérieure et inférieure de la tôle et on leur donne un nom identique.

Au cours de cette étape de fusion et comme décrit précédemment, en référence à l'étape 76 de la figure 4, on regroupe également les défauts longs, coupés lors de l'ouverture des fenêtres suspectes, en affectant, comme mentionné précédemment, le nom du défaut de la zone suspecte de grande longueur aux défauts des zones suspectes de prolongement du même groupe.

Au cours de cette étape de fusion, on analyse également la population de chaque classe élémentaire de défaut sur une longueur donnée de bande, c'est-à-dire le nombre de défauts par unité de longueur présentant la même identification.

On compare ensuite cette population à un seuil prédéterminé, appelé seuil de présomption de défaut périodique. Ce seuil est déterminé pour la même longueur donnée de bande.

Lorsque la population d'une classe élémentaire dépasse ledit seuil, on considère que des défauts de cette classe présentent vraisemblablement un caractère périodique.

Pour valider ce caractère, on peut utiliser une méthode classique de détection de défauts périodiques.

Par exemple, on trace l'histogramme de la distance entre chaque défaut de cette classe et, si cet histogramme met en évidence une périodicité (fondamentale ou harmonique), on ouvre dans la mémoire un groupe spécifique "défaut périodique" et on regroupe dans ce même groupe les défauts périodiques de cette classe.

Selon une variante, cette étape de détection et de regroupement des défauts périodiques peut être réalisée après l'extraction des paramètres mais avant l'identification et la reconnaissance, voire avant le dégrossissage ou classification préalable.

Cette variante suppose alors un traitement de classification spécifique, relativement sommaire puisqu'il doit se baser sur la caractérisation des défauts selon un nombre élevé P de paramètres et, pour la détection des défauts périodiques, on analyse alors la population des classes élémentaires définies dans cette classification spécifique.

Cette variante présente l'avantage d'afficher un résultat qui ne dépend pas des performances des modules de reconnaissance (dégrossissage et classification aval).

Après avoir détecté, reconnu et éventuellement regroupé les défauts correspondant à des irrégularités détectées, la phase ultérieure du procédé d'inspection consiste à analyser les défauts en vue d'en déterminer la gravité, pour permettre la détermination de la défectuosité de la bande. Cette phase va maintenant être décrite en référence à la figure 7.

Préalablement, avant le mise en oeuvre du procédé, pour chaque classe ou chaque type de défaut, en fonction de différentes nocivités intrinsèques possible du type de défaut, on définit un ensemble de sous-classes, chaque sous-classe étant associée à une nocivité intrinsèque possible du type de défaut. Chaque sous-classe peut éventuellement être affectée d'un coefficient de gravité intrinsèque.

on conçoit que chaque irrégularité de surface est à ce stade, identifiée et donc caractérisée par des paramètres caractéristiques, en particulier par un nombre réduit de paramètres.

Lors de la première étape 90 de cette phase d'analyse des défauts on assimile les défauts, regroupés dans un groupe de fusion dans l'étape précédente, à un seul défaut dit "défaut de fusion" . A cet effet, pour ces défauts regroupés, on calcule les paramètres caractérisant le défaut de fusion par combinaison linéaire des valeurs des paramètres caractérisant chaque défaut ou irrégularité du groupe de fusion.

A partir des valeurs des paramètres caractérisant les défauts non regroupés et les défauts de fusion, on effectue, lors de l'étape 92 suivante, une classification supplémentaire de ces défauts selon l'ensemble de sous-classes propre à chaque type de défaut.

Cette classification supplémentaire peut être réalisée selon le même type de méthodes que celles utilisées lors de la reconnaissance des défauts.

Cette classification supplémentaire aboutit à un résultat indépendant des utilisations ultérieures de la tôle.

A l'issue de cette classification supplémentaire, on peut définir un "profil de défectuosité intrinsèque" de bande par une liste donnant la population de chaque sous-classe "gravité" de chaque type ou "classe élémentaire" de défaut, cette population étant rapportée à une unité de longueur de bande ; ce profil peut être par exemple représenté sous forme d'histogrammes de la population de chaque sous-classe, disposés côte à côte dans un ordre prédéterminé (sous-classes après sous-classes, classes après classes).

Parallèlement, pour une utilisation donnée de la bande, on peut définir suivant le même formalisme (par exemple: histogrammes dans le même ordre) un "profil de défectuosité admissible", à savoir, pour chaque sous-classe "gravité" de chaque type de défaut possible, une population maximum admissible pour cette utilisation donnée (toujours rapportée à la même unité de longueur de bande).

Ce "profil de défectuosité admissible" n'est pas défini "une fois pour toute" pour une utilisation donnée; il peut même varier en fonction, par exemple, de l'évolution du cahier des charges de cette utilisation.

on compare ensuite, à l'étape 94, le profil de défectuosité intrinsèque de la bande inspectée au profil de défectuosité admissible de l'utilisation souhaitée de ladite bande.

Ainsi, au cours de l'étape 94, si on constate que le profil de défectuosité intrinsèque de la bande inspectée rentre (ou est contenu) dans le profil de défectuosité admissible de l'utilisation envisagée de cette bande, cette bande est considérée comme acceptable ou validée pour cette utilisation (étape 96).

Si tel n'est pas le cas, cette bande inspectée est considérée comme inacceptable ou "défectueuse" vis à vis de cette utilisation (étape 98).

Dans le but d'éviter de mettre cette bande inspectée au rebut, on recherche alors l'utilisation dans le profil de défectuosité admissible de laquelle le profil de défectuosité intrinsèque de cette bande inspectée rentre (ou est contenu), et on affecte cette bande à cette autre utilisation.

on sait en effet qu'une tôle présentant un nombre prédéterminé de défauts d'une gravité donnée et d'un type particulier peut n'être pas défectueuse pour une utilisation, mais peut être défectueuse pour une autre utilisation.

Par exemple, une tôle présentant une rayure est défectueuse si elle n'est pas laminée lors d'une étape de traitement ultérieure mais est considérée comme n'étant pas défectueuse si elle est relaminée, les rayures étant dès lors écrasées.

L'avantage déterminant de ce procédé d'évaluation de la défectuosité d'une bande par mesure d'un profil de défectuosité intrinsèque est que cette mesure est indépendante de l'utilisation ultérieure et aval de la bande, et de l'évolution concernant les critères à satisfaire pour cette utilisation.

Avantageusement, les profils de défectuosité intrinsèque des bandes inspectées peuvent servir, à l'inverse, à suivre l'évolution et les dérives éventuelles des procédés de fabrication de ces bandes, selon par exemple les campagnes de fabrication ; on peut ainsi par exemple repérer d'éventuelles dérives du comportement de la chaîne de laminage en amont.

Les profils de défectuosité intrinsèque des bandes inspectées peuvent également servir à identifier des dérives sur le système d'inspection lui-même.

Selon une variante simplifiée de procédé d'analyse de la défectuosité, on peut affecter, à chaque sous-classe "gravité" des types de défauts, un coefficient dont la valeur est fonction de la gravité estimée pour une utilisation donnée, et définir le profil de défectuosité d'une bande par la somme des populations de chaque sous-classes multipliées par le coefficient correspondant. Pour valider cette utilisation, on vérifie alors simplement que le résultat obtenu, à savoir ladite somme, ne dépasse par une valeur prédéterminée définie pour cette utilisation.

D'autres variantes simplifiées, basées sur l'utilisation de coefficients, peuvent être envisagées.

## Revendications

1. Procédé d'inspection de surface d'une bande en défilement, pour la détection de défauts de surface, comprenant les étapes consistant à :

   - former, à l'aide de moyens de prise de vues (12), au moins une image numérique d'au moins une des faces de la bande (10), constituée d'un ensemble de lignes successives d'éléments d'images ($I_{i,j}$, $B_{i,j}$), affectés chacun d'une valeur numérique ;
   - filtrer ladite au moins une image numérique pour la détection d'irrégularités de surface (34), par détection de variations relatives desdites valeurs numériques; et
   - traiter ladite au moins une image numérique filtrée pour l'identification du type de défaut de surface correspondant à chaque irrégularité (34) détectée;
   - préalablement à l'étape de traitement de ladite au moins une image numérique, effectuer une caractérisation générale des irrégularités en déterminant pour chacune d'elles la valeur de paramètres, prédéterminés caractéristiques de défauts de surface et effectuer une classification préalable desdites irrégularités, à partir des valeurs déterminées desdits paramètres, selon un ensemble de classes prédéfinies, ladite étape de traitement étant effectuée sur chaque classe, et étant spécifique à chaque classe, chaque paramètre prédéterminé figurant un axe de repérage général dans un espace dont les dimensions correspondent auxdits paramètres, délimiter dans ledit espace des régions correspondant chacune à une desdites classes prédéfinies, préalablement à ladite classification préalable, représenter chaque irrégularité dans ledit espace par un point dont les coordonnées sont les valeurs desdits paramètres, et effectuer ladite classificacion préalable par identification de la région à laquelle chaque point appartient, et par affectation de l'irrégularité correspondante à la classe correspondant à ladite région, et
   - déterminer un repère simplifié de représentation des irrégularités pour chaque région dont le nombre d'axes est inférieur au nombre d'axes de repérage général et, postérieurement à l'étape de classification préalable, effectuer pour chaque irrégularité représentée, une étape de changement de repère dudit repérage général vers ledit repère simplifié spécifique de la région à laquelle appartient l'irrégularité.

2. Procédé selon la revendication 1, **caractérisé en ce que** l'on détermine un second mode de caractérisation des irrégularités pour chaque classe prédéfinie dont le nombre de paramètres caractéristiques est inférieur au nombre de paramètres caractéristiques de caractérisation générale et, postérieurement à l'étape, de classification préalable, pour chaque irrégularité détectée la valeur des paramètres caractéristiques du second mode de caractérisation spécifique de ladite classe à laquelle appartient l'irrégularité, à partir des valeurs des paramètres caractéristiques de caractérisation générale.

3. Procédé selon l'une des revendications 1 ou 2, **caractérisé en ce que** l'étape de traitement des irrégularités comporte une première étape d'identification du défaut correspondant à chaque irrégularité, parmi un ensemble de types de défauts spécifiques de la classe à laquelle ladite irrégularité appartient et une deuxième étape de classification dudit défaut identifié en vue de la confirmation et de la précision de la classification résultant de ladite première étape de classification.

4. Procédé selon la revendication 3, **caractérisé en ce qu'**il comporte une étape de qualification des types de défauts identifiés selon un premier type de défauts identifiés de façon certaine et/ou précise et un deuxième type de défauts de façon incertaine et/ou imprécise et **en ce que** ladite deuxième étape de classification n'est effectuée que sur les défauts de type qualifié incertain et/ou imprécis.

5. Procédé selon l'une quelconque des revendications 1 à 4, **caractérisé en ce qu'**il comporte en outre une étape de regroupement de défauts identifiés utilisant un ensemble de critères prédéfinis, notamment des critères géométriques et/ou topographiques.

6. Procédé selon l'une quelconque des revendications 1 à 5, **caractérisé en ce qu'**il comporte en outre les étapes de comptage du nombre de défauts identifiés de même type par unité de longueur, et de comparaison dudit nombre de défauts de chaque type avec une valeur de seuil prédéterminée représentative du nombre minimum de défauts à partir duquel lesdits défauts sont susceptibles de présenter un caractère périodique, en vue de la détection de défauts périodiques.

7. Procédé selon l'une quelconque des revendications 1 à 5, **caractérisé en ce que**, postérieurement à l'étape de détermination de la valeur desdits paramètres, et antérieurement à ladite étape de classification préalable, on effectue une classification spécifique des irrégularités selon un ensemble de classes élémentaires, et l'on analyse la population desdites classes élémentaires en vue de la détection de défauts périodiques.

8. Procédé selon l'une quelconque des revendications 1 à 7, **caractérisé en ce que** postérieurement à l'étape de filtrage, en réponse à une détection d'un élément d'image d'une irrégularité, on délimite dans une mémoire (18) une zone de stockage de lignes d'éléments, d'image ($I_{i,j}$ $B_{i,j}$) successivement délivrées par les moyens de prise de vues (12) et comportant au moins un élément d'image correspondant à au moins une irrégularité (34), on segmente chaque zone de stockage en zones suspectes (66) présentant chacune au moins une irrégularité de surface (34), on apparie des zones suspectes (66) de zones de stockage successives et correspondant à une même irrégularité (34) et l'on compare le nombre total des lignes d'éléments d'image des zones suspectes (66) appariées avec un seuil de détection de défaut de grande longueur, et en cas de dépassement dudit seuil, on effectue ladite étape de traitement de ladite du moins une image numérique filtrée uniquement sur l'une desdites zones suspectes appariées, le résultat du traitement étant affecté aux autres zones suspectes (66) appariées.

**Claims**

1. Process for inspecting the surface of a moving strip in order to detect surface defects, comprising the stages consisting of:

   - forming with the aid of photographing means (12) at least one numerical image of at least one of the sides of the strip (10), consisting of a set of successive lines of image elements ($I_{i,j}$,$B_{i,j}$) to each of which is assigned a numerical value;
   - filtering the said at least one numerical image in order to detect surface irregularities (34) by detecting relative variations of the said numerical values;
   - treating the said at least one filtered numerical image in order to identify the type of surface defect corresponding to each detected irregularity (34);
   - prior to the stage involving the treatment of the said at least one numerical image, effecting a general characterisation of the irregularities by determining for each of them the value of characteristic predetermined parameters of surface defects and effecting a prior classification of the said irregularities starting from the determined values of the said parameters, according to a set of predefined classes, the said treatment stage being effected on each class and being specific to each class, each predetermined parameter exhibiting a general reference axis in a space whose dimensions correspond to the said parameters, defining in the said space regions each corresponding to one of the said predefined classes, before the said prior classification, representing each irregularity in the said space by a point whose co-ordinates are the values of the said parameters, and effecting the said prior classification by identifying the region to which each point belongs and assigning the corresponding irregularity to the class corresponding to the said region, and establishing a simplified reference system for representing the irregularities for each region whose number of axes is less than the number of general reference axes and, subsequent to the prior classification stage, effecting for each represented irregularity a stage involving a change of reference of the said general reference to the said specific simplified reference of the region to which the irregularity belongs.

2. Process according to claim 1, **characterised in that** a second mode of characterisation of the irregularities for each predefined class whose number of characteristic parameters is less than the number of characteristic parameters for general characterisation is determined and, subsequent to the prior classification stage, for each detected irregularity the value of the characteristic parameters of the second specific mode of characterisation of the said class to which the irregularity belongs is determined from the values of the characteristic parameters for general characterisation.

3. Process according to claim 1 or 2, **characterised in that** the treatment stage of the irregularities comprises a first identification stage of the defect corresponding to each irregularity from a set of specific types of defects of the class to which the said irregularity belongs and a second classification stage of the said identified defect for the purposes of confirmation and precise definition of the classification resulting from the said first classification stage.

4. Process according to claim 3, **characterised in that** it comprises an evaluation stage of the types of identified defects according to a first type of defects identified in an exact and/or precise manner and a second type of defects identified in an inexact and/or imprecise manner, and **in that** the said second classification stage is carried out only on the defects of type specified as inexact and/or imprecise.

5. Process according to any one of claims 1 to 4, **characterised in that** it comprises in addition a stage involving the rearrangement of identified defects using a set of predefined criteria, in particular geometrical and/or topographical criteria.

6. Process according to any one of claims 1 to 5, **characterised in that** it comprises in addition the stages involving counting the number of identified defects of the same type per unit length and comparing the said number of defects of each type with a predetermined threshold value representative of the minimum number of defects starting from which the said defects are capable of exhibiting a periodic character, for the purposes of detecting periodic defects.

7. Process according to any one of claims 1 to 5, **characterised in that**, subsequent to the stage involving the determination of the value of the said parameters and prior to the said preliminary classification stage, a specific classification of the irregularities is effected according to a set of elementary classes, and the population of the said elementary classes is analysed in order to detect periodic defects.

8. Process according to any one of claims 1 to 7, **characterised in that** subsequent to the filtering stage, in response to the detection of an image element of an irregularity a storage zone of lines of image elements $(I_{i,j}, B_{i,j})$ successively supplied by the photographing means (12) and comprising at least one image element corresponding to at least one irregularity (34) is demarcated in a memory (18), each storage zone is subdivided into suspect zones (66) each of which exhibits at least one surface irregularity (34), suspect zones (66) of successive storage zones and corresponding to the same irregularity (34) are matched, and the total number of lines of image elements of the matched suspect zones (66) is compared with a threshold value for detecting large magnitude defects, and in the case where this threshold value is exceeded the said treatment stage of the said at least one filtered numerical image is effected only on one of the said matched suspect zones, the result of the treatment then being applied to the other matched suspect zones (66).

**EP 0 970 368 B1**

**Patentansprüche**

1. Verfahren zum visuellen Prüfen der Oberfläche eines sich vorbeibewegenden Bandes zur Erfassung von Oberflächenfehlern, mit folgenden Schritten:

    - mit Hilfe einer Bildaufnahmeeinrichtung (12) wird von wenigstens einer der Flächen des Bandes (10) wenigstens ein digitales Bild gebildet, das aus einer Gesamtzahl von aufeinanderfolgenden Zeilen von Bildelementen ($l_{i,j}$, $B_{i,j}$) besteht, denen jeweils ein digitaler Wert zugeordnet ist;
    - das wenigstens eine digitale Bild wird gefiltert, um Oberflächenunregelmäßigkeiten (34) zu erfassen, indem relative Änderungen der digitalen Werte erfasst werden; und
    - das wenigstens eine digitale gefilterte Bild wird verarbeitet, um jeweils den Typ des Oberflächenfehlers zu identifizieren, der der erfassten Unregelmäßigkeit (34) entspricht;
    - vor dem Schritt, in dem das wenigstens eine digitale Bild verarbeitet wird, erfolgt eine allgemeine Charakterisierung der Unregelmäßigkeiten, indem für jede von ihnen der Wert vorgegebener, für Oberflächenfehler kennzeichnender Parameter bestimmt wird, und anhand der bestimmten Parameterwerte erfolgt eine Vorklassifizierung der Unregelmäßigkeiten in eine Gesamtzahl von vordefinierten Klassen, wobei der Verarbeitungsschritt für jede Klasse erfolgt und für jede Klasse spezifisch ist und jeder vorgegebene Parameter eine allgemeine Referenzortsachse in einem Raum beschreibt, dessen Dimensionen den Parametern entsprechen, und vor der Vorklassifizierung werden in dem Raum Bereiche abgegrenzt, die jeweils einer der vordefinierten Klassen entsprechen, und jede Unregelmäßigkeit wird in dem Raum durch einen Punkt dargestellt, dessen Koordinaten die Parameterwerte sind, und die Vorklassifizierung erfolgt, indem der Bereich identifiziert wird, dem der jeweilige Punkt zugehört, und indem die entsprechende Unregelmäßigkeit der zu dem Bereich gehörenden Klasse zugewiesen wird, und
    - für jeden Bereich, dessen Achsenanzahl kleiner ist als die Anzahl allgemeiner Referenzortsachsen, wird ein vereinfachter Referenzort zur Darstellung der Unregelmäßigkeiten festgelegt, und nach dem Vorklassifizierungsschritt erfolgt für jede dargestellte Unregelmäßigkeit ein Schritt, in dem der Referenzort vom allgemeinen Referenzort in den vereinfachten Referenzort abgeändert wird, der für den Bereich spezifisch ist, dem die Unregelmäßigkeit angehört.

2. Verfahren nach Anspruch 1, **dadurch gekennzeichnet, dass** für jede vordefinierte Klasse, deren Anzahl von charakteristischen Parametern kleiner ist als die Anzahl von charakteristischen Parametern der allgemeinen Charakterisierung, eine zweite Art der Charakterisierung der Unregelmäßigkeiten bestimmt wird und dass nach dem Vorklassifizierungsschritt anhand der Werte der charakteristischen Parameter der allgemeinen Charakterisierung für jede erfasste Unregelmäßigkeit der Wert der charakteristischen Parameter der zweiten Charakterisierungsart bestimmt wird, der für die Klasse spezifisch ist, der die Unregelmäßigkeit angehört.

3. Verfahren nach einem der Ansprüche 1 oder 2, **dadurch gekennzeichnet, dass** der Schritt, in dem die Unregelmäßigkeiten verarbeitet werden, einen ersten Schritt umfasst, in dem jeweils der einer Unregelmäßigkeit entsprechende Fehler aus einem Satz von Fehlertypen identifiziert wird, die für die Klasse spezifisch sind, der die Unregelmäßigkeit angehört, und einen zweiten Schritt umfasst, in dem der identifizierte Fehler klassifiziert wird, um die sich aus dem ersten Klassifizierungsschritt ergebende Klassifizierung zu bestätigen und zu verfeinern.

4. Verfahren nach Anspruch 3, **dadurch gekennzeichnet, dass** es einen Schritt aufweist, in dem die Typen identifizierter Fehler qualitativ unterschieden werden nach einem ersten Typ von Fehlern, die sicher und/oder genau identifiziert wurden, und einem zweiten Typ von Fehlern, die unsicher und/oder ungenau identifiziert wurden, und dass der zweite Klassifizierungsschritt nur auf Fehler des als unsicher und/oder ungenau beurteilten Typs angewandt wird.

5. Verfahren nach einem der Ansprüche 1 bis 4, **dadurch gekennzeichnet, dass** es ferner einen Schritt umfasst, in dem identifizierte Fehler unter Verwendung eines Satzes vordefinierter Kriterien, insbesondere geometrischer und/oder topographischer Kriterien, in Gruppen zusammengefasst werden.

6. Verfahren nach einem der Ansprüche 1 bis 5, **dadurch gekennzeichnet, dass** es ferner einen Schritt umfasst, in dem die Anzahl von identifizierten Fehlern gleichen Typs pro Längeneinheit gezählt wird, und einen Schritt umfasst, in dem die Anzahl von Fehlern jeden Typs mit einem vorgegebenen Schwellwert verglichen wird, der die Mindestzahl von Fehlern darstellt, ab der die Fehler eine Periodizität aufweisen können, im Hinblick auf eine Erfassung von periodisch auftretenden Fehlern.

7. Verfahren nach einem der Ansprüche 1 bis 5, **dadurch gekennzeichnet, dass** nach dem Schritt, in dem der Wert der Parameter bestimmt wird, und vor dem Vorklassifizierungsschritt eine spezifische Klassifizierung der Unregelmäßigkeiten gemäß einem Satz von Elementarklassen erfolgt und dass die Besetzung der Elementarklassen analysiert wird, um periodische Fehler zu erfassen.

8. Verfahren nach einem der Ansprüche 1 bis 7, **dadurch gekennzeichnet, dass** nach dem Filterschritt als Reaktion auf die Erfassung eines Bildelements einer Unregelmäßigkeit in einem Speicher (18) eine Zone zur Speicherung von Bildelementzeilen ($I_{i,j}$, $B_{i,j}$) abgegrenzt wird, die nacheinander durch die Bildaufnahmeeinrichtung (12) geliefert werden und wenigstens ein Bildelement aufweisen, das wenigstens einer Unregelmäßigkeit (34) entspricht, dass jede Speicherzone in verdächtige Zonen (66) unterteilt wird, die jeweils wenigstens eine Oberflächenunregelmäßigkeit (34) aufweisen, dass verdächtige Zonen (66) von aufeinanderfolgenden, einer gleichen Unregelmäßigkeit (34) entsprechenden Speicherzonen gepaart werden und dass die Gesamtzahl der Bildelementzeilen der gepaarten verdächtigen Zonen (66) mit einem Schwellwert zur Erfassung eines Fehlers großer Länge verglichen wird, und wenn der Schwellwert überschritten wird, wird der Schritt, in dem das wenigstens eine digitale gefilterte Bild verarbeitet wird, nur auf eine der gepaarten verdächtigen Zonen angewandt, wobei das Ergebnis der Verarbeitung den weiteren gepaarten verdächtigen Zonen (66) zugewiesen wird.

FIG.2

FIG.1

EP 0 970 368 B1

10

34

<u>FIG.3a</u>

I

<u>FIG.3b</u>

I

<u>FIG.3c</u>

<u>FIG.3d</u>

66

<u>FIG.3e</u>

FIG.4

Début

78

80

82

83

84

86

88

FIG. 5

FIG.7

FIG.6a

FIG.6b